# EUROPÄISCHE PATENTSCHRIFT

(11) **EP 2 792 283 B1**
(45) Veröffentlichungstag und Bekanntmachung des Hinweises auf die Patenterteilung: **14.06.2017**
(21) Anmeldenummer: 14164573.9
(22) Anmeldetag: 14.04.2014
(51) Int. Cl.: A47J 31/44

(54) **Getränkeautomat**
Drinks machine
Automate à boissons

(30) Priorität: 18.04.2013 DE 102013207051
(43) Veröffentlichungstag der Anmeldung: 22.10.2014
(73) Patentinhaber: BSH Hausgeräte GmbH, 81739 München (DE)
(72) Erfinder: Franzke, Peter, 83229 Sachrang/Aschau (DE); Nöth, Christoph, 84558 Tyrlaching (DE)

(56) Entgegenhaltungen:
- EP-A1- 1 563 775
- EP-A1- 1 647 951
- EP-A1- 2 186 455
- EP-A1- 2 305 081
- DE-U1- 20 017 859
- DE-U1-202005 011 476
- DE-U1-202009 006 129

## Beschreibung

Die vorliegende Erfindung betrifft einen Getränkeautomaten mit einer höhenverstellbaren Ausgabeeinrichtung, gemäß dem Oberbegriff des Anspruchs 1.

Ein gattungsgemäßer Getränkeautomat ist aus der EP 1 563 775 A1 bekannt. Dabei ist eine Ausgabeneinrichtung des Getränkeautomaten mittels zweier parallel verlaufender Schienen höhenverstellbar. Die Höhenverstellung ist dadurch realisiert, dass die Ausgabeneinrichtung entlang der Schienen verschiebbar ist.

Ein weiterer gattungsgemäßer Getränkeautomat ist aus der EP 1 745 726 A1 bekannt. Auch dieser Getränkeautomat weist eine Ausgabeneinrichtung auf, die mit Hilfe von Schienen höhenverstellbar ist.

Um bei solchen Getränkeautomaten das durch die Schwerkraft bedingte eigenständige Verschieben der Ausgabeeinrichtung nach unten zu verhindern, weisen die Getränkeautomaten eine Hemmung auf, die dieses unerwünschte, selbständige Verstellen der Ausgabeeinrichtung verhindern. Nachteilig dabei ist, dass die in eine Richtung wirkende Hemmung beim Verstellen der Ausgabeeinrichtung nach oben bzw. nach unten unterschiedliche Krafteinwirkungen eines Benutzers erfordert, was insbesondere zu einer reduzierten Ergonomie und/oder einer störenden Haptik führt. Auch das Eigengewicht der Ausgabeeinrichtung führt dazu, dass das Verstellen der Ausgabeeinrichtung nach unten leichter ist als nach oben.

Die vorliegende Erfindung beschäftigt sich mit dem Problem, für einen Getränkeautomaten der gattungsgemäßen Art eine verbesserte oder zumindest alternative Ausführungsform anzugeben, die sich insbesondere durch eine verbesserte Ergonomie und/oder durch einen verbesserten Qualitätseindruck auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, einen Getränkeautomaten mit einer Reibeinrichtung auszustatten, die eine von einer Richtung der Höhenverstellung einer Ausgabeeinrichtung des Getränkeautomaten abhängige Reibkraft auf die Ausgabeeinrichtung oder einer der Höhenverstellung dienenden Schiene ausübt. Dabei wird besagte Reibkraft vorteilhaft derart gewählt, dass die Verstellung der Ausgabeeinrichtung nach oben und nach unten eine im Wesentlichen gleiche Kraft erfordert. Dadurch wird also insbesondere die durch das Eigengewicht der Ausgabeeinrichtung bzw. die Schwerkraft bedingte Differenz der Kräfte zur Verstellung der Ausgabeneinrichtung in unterschiedliche Richtungen, also nach oben und nach unten, im Wesentlichen ausgeglichen. Dadurch wird die Handhabung bzw. Ergonomie des Kaffeeautomaten verbessert und ein qualitativ hochwertiger Eindruck erzeugt. Dem Erfindungsgedanken entsprechend weist der Getränkeautomat also die Ausgabeeinrichtung auf, die der Ausgabe eines Getränks dient. Die Ausgabeeinrichtung ist an zumindest einer Schiene höhenverstellbar. Erfindungsgemäß ist nun die Reibeinrichtung vorgesehen, welche reibschlüssig mit der Schiene zusammenwirkt und derart ausgestaltet ist, dass die mittels der Reibeinrichtung auf die Schiene wirkende Reibkraft abhängig von der Verstellrichtung ist. Mit anderen Worten, die Reibeinrichtung ist derart ausgestaltet, dass bei der Verstellung der Ausgabeeinrichtung nach oben eine andere Reibkraft zwischen Schiene und Ausgabeeinrichtung wirkt, als bei einer Verstellung der Ausgabeeinrichtung nach unten.

Die unterschiedlichen Reibkräfte können insbesondere dadurch erreicht werden, dass die Reibeinrichtung bei der Verstellung der Ausgabeeinrichtung in eine Verstellrichtung, beispielsweise nach oben, geringfügig oder gar nicht reibschlüssig mit der Schiene zusammenwirkt und bei der Verstellung der Ausgabeeinrichtung in die andere Verstellrichtung, beispielsweise nach unten, stärker reibschlüssig mit der Schiene zusammenwirkt. Es kann also insbesondere vorgesehen sein, dass die Reibeinrichtung bei der Verstellung der Ausgabeeinrichtung in eine der Verstellrichtungen zumindest über einen gewissen Verstellweg keine oder eine zu vernachlässigende Reibkraft bewirkt.

Die Reibeinrichtung ist vorteilhaft in der Ausgabeeinrichtung angeordnet. Hierbei bewirkt die Reibeinrichtung eine reibschlüssige Verbindung der Ausgabeeinrichtung mit der Schiene.

Bevorzugt wirkt die Reibkraft der Reibeinrichtung auf die Schiene. Es sind aber auch Ausgestaltungen vorstellbar, bei denen die Reibkraft auf die Ausgabeeinrichtung oder auf die Ausgabeeinrichtung und auf die Schiene wirkt. Die Schiene ist gewöhnlich ein von der Ausgabeeinrichtung separater Bestandteil des Getränkeautomaten. Selbstverständlich kann die Schiene auch Bestandteil der Ausgabeeinrichtung sein. Dabei kann die Schiene in der Ausgabeeinrichtung fixiert oder relativ zu den restlichen Bestandteilen der Ausgabeeinrichtung bewegbar, insbesondere höhenverstellbar, sein. Sind die Schiene und die Ausgabeeinrichtung aneinander befestigt, so ist die Schiene relativ zum restlichen Getränkeautomaten bewegbar bzw. höhenverstellbar. Dies kann beispielsweise dadurch realisiert sein, dass die Schiene im Getränkeautomaten, etwa durch ein geeignetes Lager, geführt ist.

Der Einfachheit halber sind üblicher Weise die Schiene und die Ausgabeeinrichtung separate Bestandteile des Getränkeautomaten sind. Es wird ferner angenommen, dass die Reibeinrichtung in der Ausgabeeinrichtung angeordnet ist. Es versteht sich jedoch, dass die folgenden Ausführungsformen und die entsprechenden Grundgedanken analog auf Getränkeautomaten mit einer in die Ausgabeeinrichtung integrierten Schiene und/oder einer in der Ausgabeeinrichtung fixierten Schiene übertragbar sind und genauso zum Umfang dieser Erfindung gehören.

Insbesondere kann vorgesehen sein, dass die beim Verstellen der Ausgabeeinrichtung nach unten auf die Schiene wirkende Reibkraft größer ist als die auf die Schiene beim Verstellen der Ausgabeeinrichtung nach oben wirkende Reibkraft. Die Differenz besagter Reibungskräfte ist hierbei vorteilhaft derart gewählt, dass zum Verstellen der Ausgabeeinrichtung nach oben und nach unten eine im Wesentlichen gleiche Kraft erforderlich ist.

Die Reibeinrichtung kann prinzipiell beliebig ausgestaltet bzw. ausgebildet sein, sofern sie besagte, von der Verstellrichtung abhängig Reibkraft bewirkt. Zur reibschlüssigen Verbindung und/oder zum Ausüben der Reibkraft auf die Schiene, weist die Reibeinrichtung bevorzugt zumindest ein Reibelement auf, das auf die Schiene einwirkt. Das Reibelement und die Schiene sind bevorzugt bei der Höhenverstellung der Ausgabeeinrichtung zumindest bereichsweise relativ zueinander bewegbar. In der Folge kann die auf die Schiene wirkende Reibkraft durch die relative Bewegung des Reibelements und der Schiene zueinander erfolgen. Das Reibelement kann im Allgemeinen beliebig ausgebildet und ausgestaltet sein. Insbesondere kann das Reibelement eine beliebige Form und/oder Größe aufweisen und aus einem beliebigen Material hergestellt sein.

Bevorzugt sind diejenigen Ausgestaltungen, bei denen das Reibelement deformierbar ist. Das heißt, dass das Reibelement, insbesondere bei der relativen Bewegung der Schiene zur Ausgabeeinrichtung, deformiert werden kann. Diese Deformation des Reibelements ist reversibel. Das Reibelement ist also derart ausgestaltet bzw. ausgebildet, dass es nach der Deformierung, beispielsweise durch eine entsprechende Krafteinwirkung, seine ursprüngliche Form annehmen kann. Bei besonders bevorzugten Ausführungsformen ist das Reibelement elastisch.

Die Höhenverstellung der Ausgabeeinrichtung mittels der Schiene kann dadurch realisiert sein, dass die Schiene in einer Aufnahme der Ausgabeeinrichtung bzw. des Getränkeautomaten geführt ist. Die reibschlüssige Verbindung der Ausgabeeinrichtung mit der Schiene kann ferner im Bereich einer solchen Aufnahme realisiert sein. Hierzu kann die Reibeinrichtung beispielsweise eine in die Aufnahme eingelassene Ausnehmung aufweisen.

In der Ausnehmung können nun beliebige Bestandteile der Reibeinrichtung angeordnet sein. Bevorzugt ist zumindest ein solches Reibelement in einer solchen Ausnehmung angeordnet. Die Ausnehmung und/oder das Reibelement können beliebige Formen und/oder Größen aufweisen. Gemäß einer bevorzugten Ausführungsform weisen das Reibelement und die Ausnehmung einen keilförmigen Querschnitt auf.

Die Ausnehmung kann zumindest geringfügig größer sein als das darin aufgenommene Reibelement. In der Folge ist das Reibelement in der Ausnehmung zumindest bereichsweise bewegbar. Insbesondere kann vorgesehen sein, dass das Reibelement bei einer entsprechenden relativen Bewegung der Ausgabeeinrichtung zur Schiene in einem spitzen Bereich der keilförmigen Ausnehmung bewegt wird, wodurch eine vergleichsweise hohe Reibkraft auf die Schiene ausgeübt wird. Bei einer relativen Bewegung der Ausgabeeinrichtung und der der Schiene in entgegengesetzte Richtung wird das Reibelement mit seiner flachen Seite in einen flachen Bereich der Ausnehmung geschoben, wodurch eine niedrigere Reibkraft auf die Schiene wirkt.

Bei einer weiteren bevorzugten Ausführungsform ist das Reibelement ringförmig ausgebildet. Dementsprechend kann auch die Ausnehmung, in der das Reibelement angeordnet ist, ringförmig ausgebildet sein. Dabei kann das Reibelement derart in der Ausnehmung angeordnet sein, dass es sich ausschließlich bei einer Relativbewegung der Ausgabeeinrichtung und der Schiene in einer Verstellrichtung verformt bzw. verwindet und bei einer Relativbewegung in entgegengesetzter Richtung flächig an der Schiene anliegt bzw. geführt ist. Dies ist insbesondere dadurch realisiert, dass sich das Reibelement bei der Verstellung der Ausgabeeinrichtung in einer der Verstellrichtungen nicht oder nur unwesentlich verformt bzw. verwindet und bei der Verstellung in die andere Verstellrichtung verformt bzw. verwindet. Dabei wirkt im verformten bzw. verwundenen Zustand des Reibelements eine niedrigere Reibkraft auf die Schiene, als im nicht-verformten Zustand.

Zur Gewährleistung einer minimalen relativen Bewegung zwischen der Ausgabeeinrichtung und der Schiene bzw. dem Reibelement und der Schiene bei der Verstellung der Ausgabeeinrichtung kann zwischen dem Reibelement und der Schiene ein Schmiermittel eingebracht sein. Beim Schmiermittel kann es sich beispielsweise um Öl, Fett und dergleichen handeln.

Die Reibeinrichtung ist vorteilhaft derart ausgestaltet, dass sie, wenn keine weiteren Kräfte auf die Ausgabeeinrichtung einwirken, insbesondere wenn keine erwünschte Verstellung der Ausgabeeinrichtung erfolgen soll, die auf die Ausgabeeinrichtung wirkende Schwerkraft bzw. Gravitationskraft ausgleicht. Das heißt, dass die Reibeinrichtung derart ausgestaltet ist, dass sich die Ausgabeeinrichtung nicht selbsttätig nach unten verstellt. Dies kann beispielsweise durch eine entsprechende, auf die Schiene wirkende Reibkraft realisiert sein.

Bevorzugt sind ferner diejenigen Ausführungsformen, bei denen die Reibeinrichtung und die Schiene in zumindest einer Verstellrichtung selbsthemmend zusammenwirken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Figur 1 und Figur 2: jeweils einen Schnitt durch einen Getränkeautomaten erster Ausführungsform bei entgegengesetzten Verstellbewegungen,
- Figur 3 und 4: jeweils einen Schnitt durch den Getränkeautomaten anderer Ausführungsform, bei entgegengesetzten Verstellbewegungen.

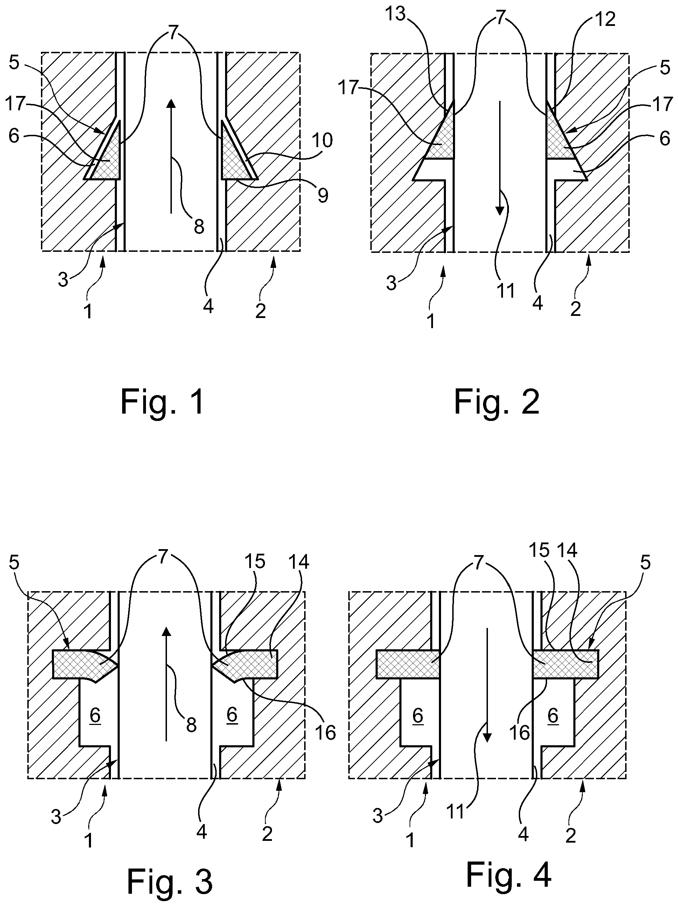

Entsprechend den Fig. 1 bis 4 weist ein Getränkeautomat 1 eine Ausgabeeinrichtung 2 auf, die der Ausgabe eines Getränkes dient. Die Ausgabeeinrichtung 2 ist höhenverstellbar. Zur Höhenverstellung der Ausgabeeinrichtung 2 ist eine Schiene 3 vorgesehen, die in einer in der Ausgabeeinrichtung 2 ausgebildeten Aufnahme 4, beispielsweise mittels eines nicht gezeigten Lagers, geführt ist. Die Höhenverstellung der Ausgabeeinrichtung 2 erfolgt hierbei durch eine relative Bewegung der Ausgabeeinrichtung 2 zur Schiene 3, welche bei den gezeigten Ausführungsformen fixiert ist. Das heißt, dass die Höhenverstellung der Ausgabeeinrichtung 2 dadurch erfolgt, dass die Ausgabeeinrichtung 2 relativ zur Schiene 3 vertikal nach oben bzw. unten verstellt wird.

Der Getränkeautomat 1 weist ferner eine Reibeinrichtung 5 auf, welche die Ausgabeeinrichtung 2 reibschlüssig mit der Schiene 3 verbindet. Die Reibeinrichtung 5 weist eine in die Aufnahme 4 eingelassene Ausnehmung 6 sowie ein elastisches Reibelement 7 auf. Die Aufnahme 4, die Schiene 3, die Ausnehmung 6 sowie das Reibelement 7 können rotationssymmetrisch ausgebildet sein. Das heißt, dass die Ausnehmung 6 und das Reibelement 7 ringförmig ausgebildet sein können, wie dies gemäß den Fig. 3 und 4 dargestellt ist. Selbstverständlich kann das Reibelement 7 auch zwei gegenüberliegende Reibkeile 17 besitzen, wie dies gemäß den Fig. 1 und 2 dargestellt ist.

In den Figuren 1 und 2 ist eine erste Variante des Getränkeautomaten 1 gezeigt. Bei dieser Variante weisen die Ausnehmung 6 und das Reibelement 7 komplementäre keilförmige Querschnitte auf. Dabei ist die Ausnehmung 6 geringfügig größer als das Reibelement 7. Folglich wird das Reibelement 7 bei einer mit einem Pfeil 8 angedeuteten Verstellbewegung in einer Verstellrichtung der Ausgabeeinrichtung 2 nach oben mit seiner Kathete 9 in einen Abschnitt 10 der Ausnehmung 6 verschoben. Bei einer mit einem Pfeil 11 angedeuteten Verstellung der Ausgabeeinrichtung 2 in die entgegengesetzte Verstellrichtung, also nach unten, wird ein spitzes Ende 12 des Reibelements 7 in einen spitzen Bereich 13 der Ausnehmung 6 verschoben, derart, dass das spitze Ende 12 in der Aufnahme 4 zwischen der Schiene 3 und der Ausgabeeinrichtung 2 eingeklemmt wird. Die Verstellrichtungen 8, 11 stellen dabei immer die Verstellrichtung der Ausgabeeinrichtung 2 relativ zur Schiene 3 dar. Dabei ist in den Figuren 1 und 2 gut erkennbar, dass bei der in Figur 1 dargestellten Verstellung der Ausgabeeinrichtung 2 nach oben eine kleinere Reibkraft zwischen dem Reibelement 7 und der Schiene 3 wirkt, als bei der in Figur 2 gezeigten Verstellung der Ausgabeeinrichtung 2 nach unten. In der Folge wird die durch die Gravitationskraft bedingte Differenz der zum Verstellen der Ausgabeeinrichtung 2 nach oben und nach unten erforderliche Kraft dadurch ausgeglichen, dass bei der Verstellung nach unten eine größere Reibkraft zwischen dem Reibelement 7 und der Schiene 2 wirkt. Dementsprechend ist zum Verstellen der Ausgabeeinrichtung 2 nach oben und nach unten eine im Wesentlichen gleiche Kraft erforderlich ist. Hierzu ist eine entsprechende Wahl des Reibelements 7, insbesondere die Wahl von entsprechenden Materialien, entsprechenden Größen usw. erforderlich, um eine passende Reibkraft bzw. passende Reibungskräfte zu erzielen.

In Figur 2 ist zudem erkennbar, dass die Reibeinrichtung 5 und die Schiene 3 in der Verstellrichtung nach unten selbsthemmend zusammenwirken und der Gravitationskraft ausgleichend entgegenwirken. Dadurch wird ein selbsttätiges und unerwünschtes Verstellen der Ausgabeeinrichtung 2 verhindert.

Bei der in den Figuren 3 und 4 gezeigten Ausführungsform weist die Ausnehmung 6 eine gestufte Form auf, wobei eine radiale Vertiefung 14 in der Ausnehmung 6 ausgebildet ist.

Das Reibelement 7 weist im in Figur 4 gezeigten Zustand einen rechteckigen Querschnitt auf und ist auf seiner von der Schiene 3 abgewandten Seite in der Vertiefung 14 angeordnet und an der Ausgabeeinrichtung 2 fixiert. Auf seiner der Schiene 3 zugewandten Seite liegt das Reibelement 7 mit seiner Unterseite 15 in der Ausnehmung 7 an der Ausgabeeinrichtung 2 an und ist an seiner Oberseite 16 frei. Dementsprechend wird das Reibelement 7 bei einer Verstellung der Ausgabeeinrichtung 2 nach oben, wie in Figur 3 dargestellt, verformt bzw. verwunden, so dass eine geringere Fläche des Reibelements 7 an der Schiene 3 anliegt. Beim nach unten Verstellen der Ausgabeeinrichtung 2 liegt die der Schiene 3 zugewandte Seite des Reibelements 7, wie in Figur 4 dargestellt, flächig an der Schiene 3 an, so dass eine vergrößerte Fläche mit der Schiene 3 zusammenwirkt. Dementsprechend wirkt beim Verstellen der Ausgabeeinrichtung 2 nach oben eine geringere Reibkraft auf die Schiene 3, als beim Verstellen der Ausgabeeinrichtung 2 nach unten. Auch hier ist die Reibkraft derart bemessen, dass sie der Gravitationskraft entgegenwirkt, so dass ein selbsttätiges Verstellen der Ausgabeeinrichtung 2 verhindert ist und eine selbsthemmende Wirkung erzielt wird.

Die Reibeinrichtungen 5 sind derart ausgestaltet, dass das Verstellen der Ausgabeeinrichtung 2 nach oben und nach unten eine im Wesentlichen gleiche Kraft erfordert. Dies kann durch eine entsprechende geometrische Anpassung und durch entsprechende Materialwahlen erreicht werden. Auch ist es vorstellbar, zwischen dem Reibelement 7 und der Schiene 3 ein Schmiermittel, beispielsweise Fett, einzubringen.

Selbstverständlich ist es auch vorstellbar, die Schiene 3 an der Ausgabeeinrichtung 2 zu fixieren und gemeinsam mit der Ausgabeeinrichtung 2 zu verschieben, um die Höhenverstellung der Ausgabeeinrichtung 2 zu realisieren. Hierbei ist die Schiene 3 anderweitig im Getränkeautomaten 1 geführt, wobei die Reibeinrichtung 5 analog an entsprechender Stelle im Getränkeautomaten 1 angeordnet ist und erfindungsgemäß mit der Schiene 3 zusammenwirkt.

### Bezugszeichenliste

- 1: Getränkeautomat
- 2: Ausgabeeinrichtung
- 3: Schiene
- 4: Aufnahme
- 5: Reibeinrichtung
- 6: Ausnehmung
- 7: Reibelement
- 8: Verstellrichtung oben
- 9: Kathete
- 10: Bereich
- 11: Verstellrichtung unten
- 12: Spitze Seite
- 13: Spitzer Bereich
- 14: Vertiefung
- 15: Unterseite
- 16: Oberseite
- 17: Reibkeile

## Patentansprüche

1. Getränkeautomat (1) mit einer Ausgabeeinrichtung (2) zur Ausgabe eines Getränks, wobei die Ausgabeeinrichtung (2) mittels zumindest einer Schiene (3) vertikal nach unten und oben höhenverstellbar am Getränkeautomaten (1) angeordnet ist, **gekennzeichnet, durch** eine Reibeinrichtung (5) die derart ausgestaltet ist, dass eine mittels der Reibeinrichtung (5) auf die Schiene (3) wirkende Reibkraft abhängig von der Verstellrichtung (8, 11) ist.

2. Getränkeautomat nach Anspruch 1, **dadurch gekennzeichnet, dass** die Reibeinrichtung (5) zumindest ein auf die Schiene (3) einwirkendes Reibelement (7) aufweist, wobei das Reibelement (7) und die Schiene (3) bei der Höhenverstellung der Ausgabeeinrichtung (2) relativ zueinander bewegbar sind.

3. Getränkeautomat nach Anspruch 2, **dadurch gekennzeichnet, dass** das Reibelement (7) deformierbar, insbesondere elastisch, ist.

4. Getränkeautomat nach einem der Ansprüche 1 bis 3, **dadurch gekennzeichnet, dass** die Schiene (3) in einer Aufnahme (4) geführt ist, wobei die Reibeinrichtung (5) zumindest eine in die Aufnahme (4) eingelassene Ausnehmung (6) aufweist.

5. Getränkeautomat nach Anspruch 4, **dadurch gekennzeichnet, dass** zumindest ein solches Reibelement (7) in der Ausnehmung (6) angeordnet ist.

6. Getränkeautomat nach einem der Ansprüche 2 bis 5, **dadurch gekennzeichnet, dass** das Reibelement (7) und die Ausnehmung (6) einen keilförmigen Querschnitt aufweisen.

7. Getränkeautomat nach einem der Ansprüche 4 bis 6, **dadurch gekennzeichnet, dass** die Ausnehmung (6) zumindest geringfügig größer ist als das darin aufgenommene Reibelement (7), so dass sich das Reibelement (7) in der Ausnehmung (6) bewegen kann.

8. Getränkeautomat nach einem der Ansprüche 4 oder 5, **dadurch gekennzeichnet, dass** das Reibelement (7) ringförmig ausgebildet ist und derart in einer ringförmig gestalteten Ausnehmung (6) angeordnet ist, dass es sich ausschließlich bei einem nach oben Bewegen der Ausgabeeinrichtung (2) verwindet, wogegen es bei einem nach unten Bewegen der Ausgabeeinrichtung (2) flächig an der Schiene (3) geführt ist.

9. Getränkeautomat nach einem der Ansprüche 1 bis 8, **dadurch gekennzeichnet, dass** die Reibeinrichtung (5) derart ausgestaltet ist, dass die Bewegung der Ausgabeeinrichtung (2) sowohl nach oben als auch nach unten eine im Wesentlichen gleiche Kraft erfordert.

10. Getränkeautomat nach einem der Ansprüche 1 bis 9, **dadurch gekennzeichnet,**
- **dass** die Reibeinrichtung (5) die auf die Ausgabeeinrichtung (2) wirkende Gravitationskraft ausgleicht, und/oder
- **dass** die Reibeinrichtung (5) und die Schiene (3) in zumindest einer Verstellrichtung (8, 11) selbsthemmend zusammenwirken, und/oder
- **dass** die Reibeinrichtung (5) in der Ausgabeeinrichtung (2) angeordnet ist.

## Claims

1. Drinks machine (1) having a dispensing device (2) for dispensing a drink, wherein the dispensing device (2) is arranged on the drinks machine (1) so as to be height-adjustable vertically downwards and upwards by means of at least one rail (3), **characterised by** a friction device (5) which is designed such that a friction force acting on the rail (3) by means of the friction device (5) is dependent on the adjustment direction (8, 11).

2. Drinks machine according to claim 1, **characterised in that** the friction device (5) has at least one friction element (7) acting on the rail (3), wherein the friction element (7) and the rail (3) can move relative to one another during the height adjustment of the dispensing device (2).

3. Drinks machine according to claim 2, **characterised in that** the friction element (7) is deformable, in particular elastic.

4. Drinks machine according to one of claims 1 to 3, **characterised in that** the rail (3) is guided in a receptacle (4), wherein the friction device (5) has at least one recess (6) let into the receptacle (4).

5. Drinks machine according to claim 4, **characterised in that** at least one such friction element (7) is arranged in the recess (6).

6. Drinks machine according to one of claims 2 to 5, **characterised in that** the friction element (7) and the recess (6) have a wedge-shaped cross-section.

7. Drinks machine according to one of claims 4 to 6, **characterised in that** the recess (6) is at least slightly bigger than the friction element (7) accommodated therein, such that the friction element (7) can move in the recess (6).

8. Drinks machine according to one of claims 4 or 5, **characterised in that** the friction element (7) is designed to be annular and is arranged in an annularly shaped recess (6) such that it distorts only in the event of an upward movement of the dispensing device (2), whereas it is guided in a planar fashion on the rail (3) in the event of a downward movement of the dispensing device (2).

9. Drinks machine according to one of claims 1 to 8, **characterised in that** the friction device (5) is designed such that the movement of the dispensing unit (2) both upwards and downwards requires an essentially identical force.

10. Drinks machine according to one of claims 1 to 9, **characterised in that**
- the friction device (5) equalises the force of gravity acting on the dispensing device (2), and/or
- the friction device (5) and the rail (3) interact in a self-impeding manner in at least one adjustment direction (8, 11), and/or
- the friction device (5) is arranged in the dispensing device (2).

## Revendications

1. Automate à boissons (1) avec un dispositif de distribution (2) pour la distribution d'une boisson, dans lequel le dispositif de distribution (2) est disposé au moyen d'au moins un rail (3) de manière réglable en hauteur verticalement vers le haut et vers le bas sur l'automate à boissons (1), **caractérisé par** un dispositif à friction (5) aménagé de telle sorte qu'une force de friction agissant au moyen du dispositif à friction (5) sur le rail (3) dépend du sens de déplacement (8, 11).

2. Automate à boissons selon la revendication 1, **caractérisé en ce que** le dispositif à friction (5) présente au moins un élément à friction (7) agissant sur le rail (3), dans lequel l'élément à friction (7) et le rail (3) sont déplaçables l'un par rapport à l'autre lors du réglage en hauteur du dispositif de distribution (2).

3. Automate à boissons selon la revendication 2, **caractérisé en ce que** l'élément à friction (7) est déformable, en particulier élastique.

4. Automate à boissons selon l'une des revendications 1 à 3, **caractérisé en ce que** le rail (3) est mené dans un logement (4), le dispositif à friction (5) présentant au moins un creux (6) admis dans le logement (4).

5. Automate à boissons selon la revendication 4, **caractérisé en ce qu'**au moins un tel élément à friction (7) est disposé dans le creux (6).

6. Automate à boissons selon l'une des revendications 2 à 5, **caractérisé en ce que** l'élément à friction (7) et le creux (6) présentent une section cunéiforme.

7. Automate à boissons selon l'une des revendications 4 à 6, **caractérisé en ce que** le creux (6) est au moins légèrement plus grand que l'élément à friction (7) qui y est accueilli, de sorte que l'élément à friction (7) puisse bouger dans le creux (6).

8. Automate à boissons selon l'une des revendications 4 ou 5, **caractérisé en ce que** l'élément à friction (7) est exécuté de manière annulaire et disposé de telle manière dans un creux annulaire (6) qu'il se tord exclusivement lors d'un déplacement du dispositif de distribution (2) vers le haut mais est par contre déplacé de manière plane devant le rail (3) lors d'un déplacement du dispositif de distribution (2) vers le bas.

9. Automate à boissons selon l'une des revendications 1 à 8, **caractérisé en ce que** le dispositif à friction (5) est aménagé de telle sorte que le déplacement du dispositif de distribution (2) tant vers le haut que vers le bas exige une force essentiellement égale.

10. Automate à boissons selon l'une des revendications 1 à 9, **caractérisé en ce que**,
- le dispositif à friction (5) compense la force de gravité agissant sur le dispositif de distribution (2), et/ou
- le dispositif à friction (5) et le rail (3) coopèrent de sorte à assurer un blocage automatique dans au moins un sens de déplacement (8, 11), et/ou
- le dispositif à friction (5) est disposé dans le dispositif de distribution (2).
